# EUROPÄISCHE PATENTSCHRIFT

(11) **EP 1 759 112 B1**
(45) Veröffentlichungstag und Bekanntmachung des Hinweises auf die Patenterteilung: **03.06.2009**
(21) Anmeldenummer: 05729577.6
(22) Anmeldetag: 31.03.2005
(51) Int. Cl.: F02M 35/04, F02M 35/024

(54) **ANSAUGFILTER FÜR EINE BRENNKRAFTMASCHINE EINES FAHRZEUGS**
SUCTION FILTER FOR AN INTERNAL COMBUSTION ENGINE OF A MOTOR VEHICLE
FILTRE ASPIRATEUR POUR MOTEUR A COMBUSTION INTERNE DE VEHICULE

(30) Priorität: 31.03.2004 DE 102004016546
(43) Veröffentlichungstag der Anmeldung: 07.03.2007
(73) Patentinhaber: MANN + HUMMEL GMBH, D-71638 Ludwigsburg (DE)
(72) Erfinder: MOSER, Nikolaus, 71254 Ditzingen (DE); FRANZ, Andreas, 71638 Ludwigsburg (DE); SCHIMPF, Birgit, 71640 Ludwigsburg (DE); HAMMERSCHICK, Jörg, 71679 Asperg (DE); WALTENBERG, Klaus, 71723 Grossbottwar (DE); WEISSENBACHER, Emese, 71672 Marbach / Neckar (DE); SCHUSTER, Mathias, 75242 Neuhausen (DE); CEDZICH, Wolfgang, 71686 Remseck (DE); BÜHL, Heinz, 74235 Erlenbach (DE); STEUSS, Andreas, 74321 Bietigheim-Bissingen (DE); WERNER, Jürgen, 73666 Baltmannsweiler (DE); SPÄTH, Harald, 71726 Benningen (DE); GRADL, Matthias, 96145 Sesslach (DE); LECHNER, Michael, 96269 Grossheirath (DE); LINDE, Hansjürgen, 96450 Coburg (DE); NEUMANN, Uwe, 65187 Wiesbaden (DE)
(74) Vertreter: Voth, Gerhard
(86) Internationale Anmeldenummer: PCT/EP2005/051468
(87) Internationale Veröffentlichungsnummer: WO 2005/095783

(56) Entgegenhaltungen:
- US-A- 1 957 919
- US-A- 4 157 902
- US-A- 4 932 490
- US-A- 5 902 365

## Beschreibung

Die Erfindung betrifft ein Ansaugfilter für eine Brennkraftmaschine eines Fahrzeuges bestehend aus einem Rohluftansaugbereich, einem Filtermedium und einem Reinluftrohr, wobei der Rohluftansaugbereich unterhalb der Motorhaube des Fahrzeugs und mit der Motorhaube verbunden angeordnet ist.

Aus der US 4 932 490 ist ein Fahrzeug mit einer Brennkraftmaschine bekannt. Zur Zuführung der Ansaugluft für die Brennkraftmaschine ist an der Motorhaube ein Rohluftkanal vorgesehen, der die von der Frontseite des Fahrzeugs einströmende Luft aufnimmt. Dieser Rohluftkanal führt zu einem Filtergehäuse, in diesem Filtergehäuse ist ein Filterelement zum Filtrieren der Rohluft angeordnet. Die gereinigte Rohluft strömt über einen motorhaubenseitig angeordneten Reinluftkanal zu einer Übergabeeinheit, von dort wird sie über einen flexiblen Schlauch an die Brennkraftmaschine geleitet. Beim Öffnen der Motorhaube wird der flexible Schlauch von der Reinluftleitung getrennt. Der Luftfilter ist an der Motorhaube befestigt und kann bei Bedarf ausgetauscht werden. Zur Befestigung des Luftfilters ist ein entsprechendes Gehäuse vorgesehen, welches geöffnet werden kann.

Ein Nachteil bei dieser Einrichtung besteht darin, dass das Gehäuse des Luftfilters ein starres Gebilde ist, ebenso sind die reinluft- und rohluftführenden Elemente speziell geformte Blechteile, die an der Motorhaube angeordnet sind. Diese führen zu einer Versteifung der Motorhaube in einem Bereich der aus Sicherheitsgründen relativ nachgiebig ausgestaltet sein sollte. Außerdem ist für das Luftfilterelement ein spezielles Gehäuse erforderlich, welches das Gewicht der Motorhaube nicht unbeträchtlich erhöht.

Aus der US 4,932,490 ist ein Luftfilter bekannt, der an der Motorhaube eines Fahrzeugs befestigt ist. Die von dem Luftfilter gereinigte Luft wird über eine entsprechende Schlauchverbindung dem Motor zugeführt.

Die US 5,902,364 beschreibt ferner ein Filterelement in einem Rohr, welches zick zack förmig gefaltet ist.

Der Erfindung liegt die Aufgabe zugrunde, einen Ansaugfilter für eine Brennkraftmaschine zu schaffen, welcher an der Motorhaube angeordnet ist und weder die Funktion der Motorhaube beeinträchtigt, noch ein spezielles Gehäuse benötigt.

Diese Aufgabe wird ausgehend von dem Oberbegriff des unabhängigen Anspruchs 1 dadurch gelöst, dass das Filtermedium aus einem schlauchförmigen Körper besteht, wobei dieser schlauchförmige Körper eine Porösität aufweist derart, dass eine ausreichende Filtrierung der Ansaugluft für die Brennkraftmaschine gewährleistet ist.

Der wesentliche Vorteil der Erfindung liegt darin, dass das Filtersystem platzsparend innerhalb des Motorraums eines Fahrzeugs untergebracht werden kann. Gerade die Motorhaube des Fahrzeugs und der zwischen der Motorhaube und dem Motor vorhandene Raum, kann in vorteilhafter Weise genutzt werden um das relativ weiche Element bzw. die weichen Elemente eines schlauchförmigen Filterkörpers anzuordnen. Aufgrund der relativ großen zur Verfügung stehenden Fläche lassen sich mehrere schlauchförmige Körper parallel anordnen. Die Gestaltung kann sich an die Motorhaubenstruktur anpassen.

In einer Ausgestaltung der Erfindung wird vorgeschlagen, dass der schlauchförmige Körper ein Filterschlauch ist, der einen Durchmesser im Bereich von 40-80mm aufweist. Ein solcher Filterschlauch besteht beispielsweise aus einem Vlieskörper, wobei das Vlies die filterwirksamen Eigenschaften besitzt. Selbstverständlich besteht auch die Möglichkeit, gemäß einer weiteren Ausgestaltung der Erfindung, den schlauchförmigen Körper mit einer Faltgeometrie zu versehen, so dass eine bogenförmige Verlegung möglich wird. Das Falten des Filterelements erfolgt beispielsweise dadurch, dass mehrere parallel zueinander angeordnete, aneinanderlegbare Falten gebildet werden. die quer zur Längsachse des Filters verlaufen.

Eine Weiterbildung der Erfindung sieht vor, das Filtermedium reinluftseitig mit einem elastischen Stützmittel auszustatten. Dieses Stützmittel ist insbesondere ein schraubenförmig verlaufender Stützdraht oder ein entsprechend gestaltetes Stützgitter. Selbstverständlich kann ein Stützdraht nicht nur aus einem metallischen Werkstoff sondern auch aus einem Polymermaterial hergestellt sein. Damit ein Ansaugen von warmer Motorabluft verhindert wird, ist in einer vorteilhaften Ausgestaltung der Erfindung der schlauchförmige Körper mit einer Abdeckung versehen. Diese Abdeckung sorgt dafür, dass die anzusaugende Frischluft an definierten Stellen, wie zum Beispiel im oberen Bereich des Kühlergrills, einströmt und dem Ansaugfilter zugeführt wird. Die Abdeckung besitzt auch akustische Eigenschaften, das heißt, es lässt sich insbesondere das Ansaugeräusch der Brennkraftmaschine reduzieren.

Nach einer weiteren Ausgestaltung des schlauchförmigen Körpers ist dies ein Wickelfilter, welcher eine Vielzahl von nutenförmigen Hohlräumen aufweist. Solche Wickelfilter haben den Vorteil, dass sie eine sehr kurze Baulänge bei hoher wirksamer Filterfläche besitzen, außerdem sind diese kompakt aufgebaut und lassen sich einfach austauschen.

### Zeichnung

Weitere Einzelheiten der Erfindung werden in der Zeichnung anhand von schematischen Ausführungsbeispielen beschrieben. Hierbei zeigt
- Figur 1: in schematischer Darstellung den Motorraum eines PKW bei geöffneter Motorhaube,
- Figur 2: den in Figur 1 gezeigten Aufbau mit einer geänderten Filtervariante,
- Figur 3: einen Wickelfilter zum Einbau in eine Motorhaube,
- Figur 4: die Variante eines Wickelfilters zur optimierten Anpassung an die Struktur einer Motorhaube,
- Figur 5: die schematische Darstellung eines Motorraums eines Fahrzeugs,
- Figur 6: ein gefaltetes Filterelement,
- Figur 7: den Ausschnitt einer Frontansicht der in Figur 5 gezeigten Darstellung.

### Beschreibung der Ausführungsbeispiele

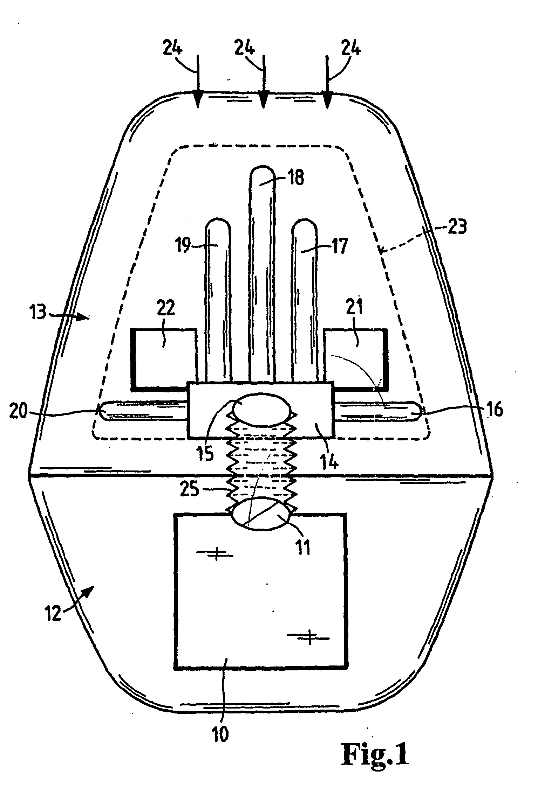

In der Darstellung gemäß Figur 1 ist der Motor 10 eines Kraftfahrzeugs in schematischer Darstellung gezeichnet. An diesem Motor befindet sich eine Öffnung 11, durch welche die Ansaugluft einströmt und von dort auf die einzelnen Zylinder des Motors verteilt wird. Oberhalb des Motorraums 12 ist eine Motorhaube 13 angeordnet. In der hier gezeigten Darstellung ist diese geöffnet. An der Unterseite der Motorhaube 13 die hier sichtbar ist, befindet sich eine Luftsammelbox 14, die eine Reinluftöffnung 15 aufweist. Diese Luftsammelbox besitzt wiederum nach außen Öffnungen welche mit schlauchförmigen Filterelementen (Filterschläuche 16, 17, 18, 19, 20) korrespondieren Die Filterschläuche besitzen einen runden oder ovalen Querschnitt und sind ebenfalls nur schematisch dargestellt. Zusätzlich zu den Filterschläuchen sind Resonanzkammem 21, 22 vorgesehen, die über Öffnungen mit der Luftsammelbox 14 in Verbindung stehen und bei entsprechender Auslegung eine Geräuschdämmung bezüglich des Luftansauggeräuschs bewirken. Die Filterschläuche und auch die Resonanzkammern werden zum Motor hin abgedeckt durch eine im Wesentlichen luftdichte Abdeckung 23. Diese ist in der Zeichnung lediglich gestrichelt angedeutet. Zur Front des Fahrzeugs und zur Front der Motorhaube ist diese Abdeckung geöffnet, so dass Frischluft gemäß den Pfeilen 24 von vorne, dass heißt von der Fahrzeugfront aus, in den Filterbereich einströmen kann. Diese Frischluft wird durch die Filterschläuche gereinigt und steht der Brennkraftmaschine zur Verfügung. Die Verbindung zwischen der Reinluftöffnung 15 und der Öffnung 11 für die Ansaugluft am Motor 10 wird durch schließen der Motorhaube hergestellt. Beide Öffnungen können dauerhaft durch einen elastischen Verbindungsschlauch 25 gekoppelt sein. Es besteht auch die Möglichkeit, eine elastische Verbindung durch geeignete Verbindungsglieder herzustellen, die beim Öffnen der Motorhaube löst, dabei ist jedoch erforderlich, dass die Öffnung 11 bei geöffneter Motorhaube verschlossen ist. Dies erfolgt beispielsweise durch eine geeignete Blende oder Klappe.

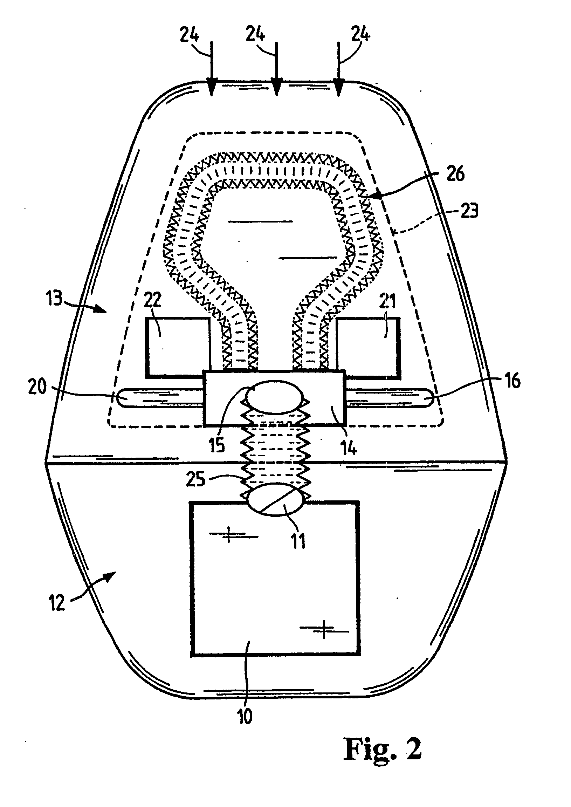

Figur 2 zeigt eine nicht erfindungsgemäße Variante, gleiche Teile sind mit gleichen Bezugszeichen versehen, anstelle von statischen Filterschläuchen ist hier ein elastischer Filterschlauch 16 mit der Luftsammelbox 14 verbunden. Der Filterschlauch 16 besteht aus einem Vlies oder Papierwerkstoff mit filterwirksamen Eigenschaften, wobei das Filtermedium selbst, mehrere parallel zueinander angeordnete aneinanderlegbare Falten aufweist die quer zur Längsachse des Filters verlaufen. Damit ist eine flexible und and die Struktur der Motorhaube anpassbare Verlegung des Filtermediums möglich. Selbstverständlich sind hier eine Vielzahl von Verlegearten denkbar, insbesondere besteht die Möglichkeit, bei großvolumigen Motoren eine entsprechend hohe filterwirksame Oberfläche zu Verfügung zu stellen.

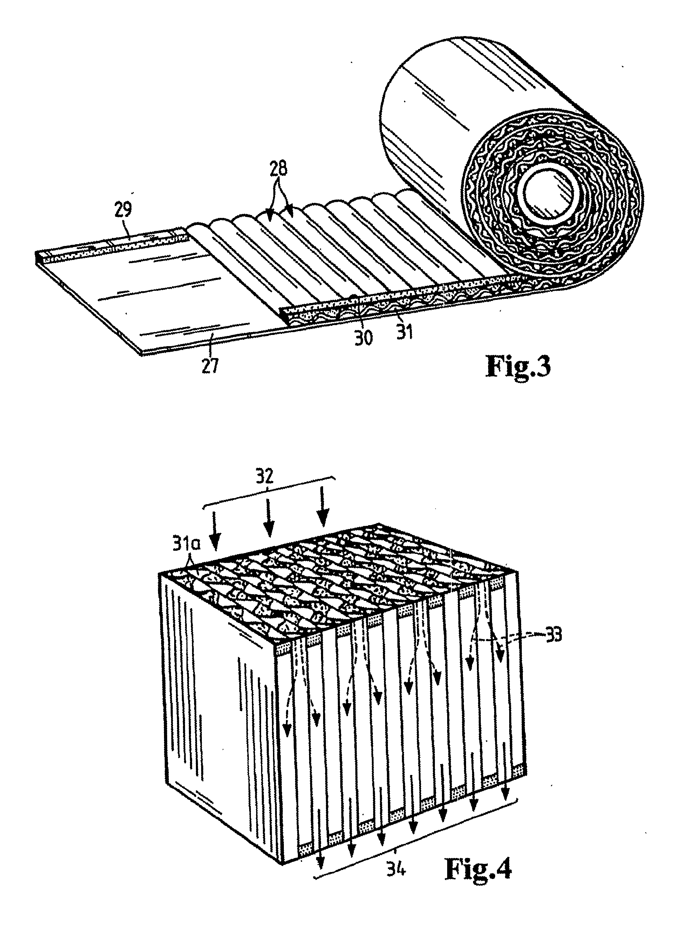

Figur 3 zeigt das Filtermedium als Wickelfilter. Dieser Wickelfilter besteht aus einer ersten Filterbahn 27, auf welche eine Wellbahn 28 aufgelegt ist. Die Verklebung der Bahn 28 auf der Filterbahn 27 erfolgt über eine Kleberaupe 29 an einer Seite des Filterelements. Beim Wickeln wird auf der gegenüberliegenden Seite eine Kleberaupe 30 aufgebracht, diese verbindet die Wellbahn 28 mit der bereits gewickelten Filterbahn 27. Damit entstehen einseitig geöffnete Kanäle 31, welche ein Einströmen von Luft ermöglichen. Die Luft kann auf der gegenüberliegenden Seite jedoch nicht entweichen, sondern durchdringt die filterwirksame Wellbahn und tritt auf der gegenüberliegenden Seite gereinigt aus. Selbstverständlich kann ein solcher Wickelfilter auch eine ovale oder - wie in Figur 4 gezeigt - eine quaderförmige Form aufweisen.

Diese Figur 4 zeigt die wechselseitig verschlossenen Öffnungen der einzelnen Kanäle. Die Rohluft tritt gemäß dem Pfeil 32 in die Kanäle ein, durchströmt diese Kanäle gemäß den Pfeilen 33 und verlässt gereinigt, gemäß den Pfeilen 34 das Filterelement.

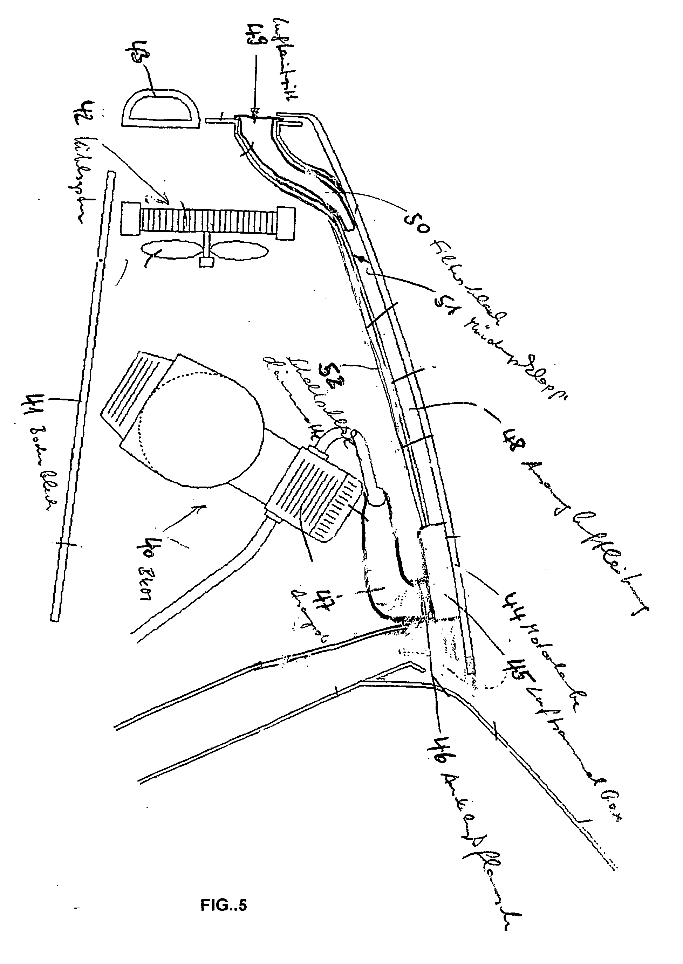

In Figur 5 ist in einer nicht erfindungsgemäßen schematischen Darstellung der Vorderwagen eines Fahrzeuges dargestellt mit der Brennkraftmaschine 40 die oberhalb eines Bodebleches 41 angeordnet ist. Vor der Brennkraftmaschine ist ein Kühlsystem 42 vorgesehen. Vor dem Kühlsystem 42 befindet sich der Stoßfänger 43. Der Motorraum wird durch die Motorhaube 44 geschlossen. Unterhalb der Motorhaube und an dieser befestigt, ist eine Luftsammelbox 45 vorgesehen. Von dieser Luftsammelbox 45 erstreckt sich über einen Anschlussflansch 46 ein Ansaugrohr 47 bis hin zur Brennkraftmaschine 40. Der Luftsammelbox 45 ist wenigstens eine Ansaugluftleitung 48 zugeordnet. Diese Ansaugluftleitung ist ebenfalls unmittelbar unter der Motorhaube 44 an dieser befestigt und erstreckt sich bis zum Lufteintritt 49. Der Lufteintritt 49 ist im Bereich des Frontend der Brennkraftmaschine angeordnet. Innerhalb der Ansaugluftleitung 48 befindet sich ein Filterschlauch 50 der sich vom Lufteintritt 49 bis über eine bestimmte Länge der Ansaugluftleitung 48 erstreckt.

Zur Reduzierung von Ansauggeräuschen am Lufteintritt 49 kann in der Ansaugluftleitung 48 eine Mündungsklappe 51 vorgesehen sein. Diese verringert den Querschnitt der Leitung je nach erforderlicher Luftmenge und verhindert somit eine Schallabstrahlung des Ansauggeräuschs der Brennkraftmaschine. Es besteht auch die Möglichkeit, diese Mündungsklappe unmittelbar am Lufteintritt 49, eventuell vor dem Filterschlauch 50 anzuorden. Unterhalb der Ansaugluftleitung 48 ist eine Schallschluckdämmmatte 52 vorgesehen, diese stellt gleichzeitig die Verkleidung für mehrere Ansaugluftleitungen dar. Sofern die Motorhaube 44 öffenbar ist, besteht das Ansaugrohr 47 aus einem längenflexiblen Rohr. Die Flexibilität wird beispielsweise durch eine Faltung oder durch einen Teleskopaufbau erreicht. Sofern die Motorhaube lediglich zu Wartungszwecken abnehmbar ist, kann das Ansaugrohr 47 starr ausgebildet sein. In diesem Fall ist ein Lösen des Ansaugrohres 47 am Anschlussflansch 46 erforderlich. Die Verbindung zwischen Ansaugrohr 47 und Anschlussflansch 46 kann in diesen Fällen über eine Steckverbindung erfolgen.

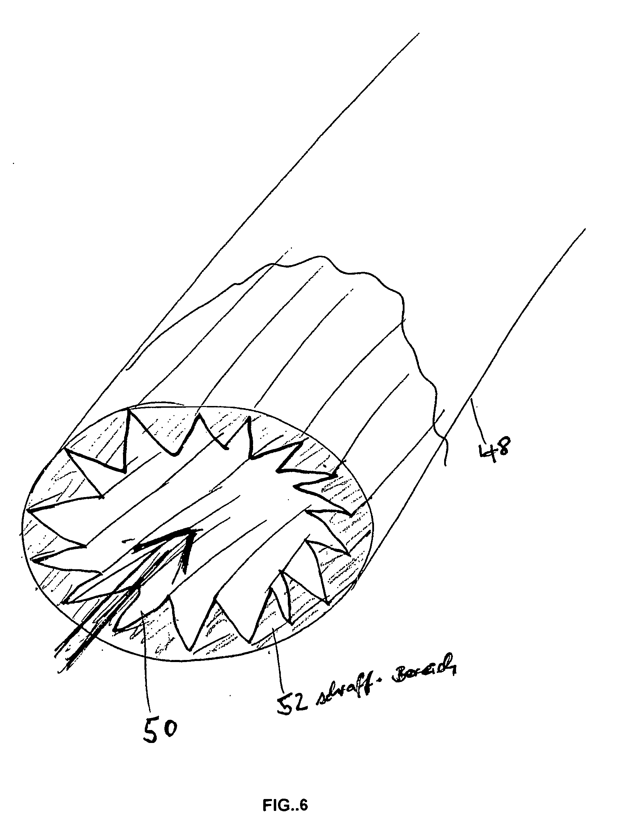

Figur 6 zeigt in einer Detaildarstellung einen Filterschlauch 50, dieser ist zickzackförmig in Längsrichtung gefaltet und in einer geschlossenen Ansaugluftleitung 48 angeordnet.

Die Rohluft strömt im Inneren des Filterschlauchs 50 ein. Selbstverständlich ist hierfür eine Abdichtung des schraffierten Bereichs 52 erforderlich, dies erfolgt über einen entsprechend gestalteten Flansch. Die zu reinigende Luft tritt innerhalb der Ansaugluftleitung 48 nach außen in den Reinluftbereich und strömt anschließend über die Ansaugluftleitung zu der Luftsammelbox 45.

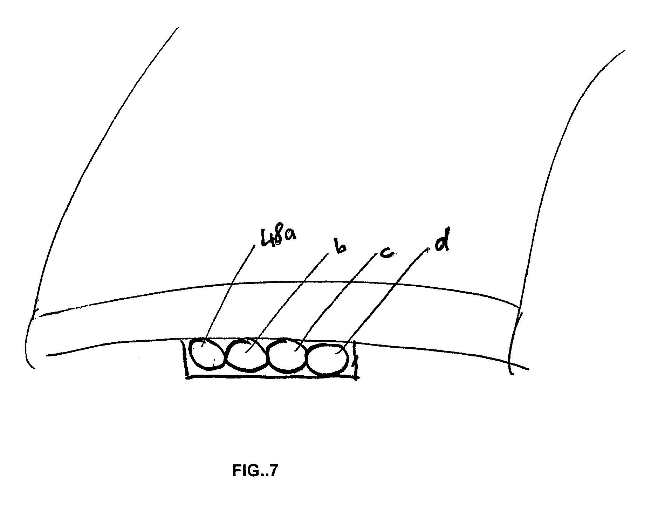

Figur 7 zeigt die Frontansicht in einer Detaildarstellung eines Fahrzeugs mit den im Bereich des Lufteinlasses angeordneten einzelnen Ansaugluftleitungen 48a-d. Es ist ersichtlich, dass hier vier einzelne Ansaugluftleitungen zu der Luftsammelbox geführt werden. Der Vorteil von einzelnen Ansaugluftleitungen liegt darin, dass diese variabel geführt sind und eventuell auch Strukturen der Motorhaube ausweichen können. Bei dem Eintritt der Ansaugluftleitungen in die Luftsammelbox findet ein Querschnittsprung statt. Dieser Querschnittssprung ist erforderlich, um die Ansaugakustik zu verbessern, das heißt um Schallwellen zu reflektieren. Sofern die Ansaugluftleitungen unterhalb der Motorhaube angeordnet sind, ist es zweckmäßig die Öffnungen gegenüber dem Motorraum abzudichten, so dass keine Warmluft angesaugt wird, sondern auf jeden Fall Frischluft aus dem Bereich des Frontend zugeführt werden kann.

## Patentansprüche

1. Ansaugfilteranordnung für eine Brennkraftmaschine eines Fahrzeuges bestehend aus einem Rohluftansaugbereich, einem Filtermedium und einem Reinluftrohr (25), wobei der Rohluftansaugbereich unterhalb der Motorhaube (13)des Fahrzeugs und mit der Motorhaube (13) verbunden angeordnet ist, wobei das Filtermedium aus einem schlauchförmigen Körper (16) besteht, wobei dieser schlauchförmige Körper (16) eine Porösität aufweist derart, dass eine ausreichende Filtrierung der Ansaugluft für die Brennkraftmaschine gewährleistet ist, **dadurch gekennzeichnet, dass** der schlauchförmige Körper (16) auf der, der Motorhaube (13) gegenüberliegenden Seite mit einer elastischen, im Wesentlichen luftdichten Abdeckung versehen ist und wenigstens zwei schlauchförmige Körper mit Filtermedium (16-20) vorgesehen sind, in welchen das Filtermedium angeordnet ist, wobei die schlauchförmigen Körper mit Filtermedium unmittelbar unter der Motorhaube (13) verlaufen und in eine gemeinsame Luftsammelbox (14) münden.

2. Ansaugfilteranordnung für eine Brennkraftmaschine nach Anspruch 1, **dadurch gekennzeichnet, dass** der schlauchförmige Körper (16) ein Filterschlauch (50) ist, der einen Durchmesser im Bereich von 40-80 mm aufweist.

3. Ansaugfilteranordnung nach Anspruch 1, **dadurch gekennzeichnet, dass** der schlauchförmige Körper (16) eine Faltgeometrie aufweist, die eine bogenförmige Verlegung ermöglicht.

4. Ansaugfilteranordnung für eine Brennkraftmaschine nach Anspruch 3, **dadurch gekennzeichnet, dass** das Filtermedium mehrere parallel zueinander angeordnete aneinanderlegbare Falten aufweist, die quer zur Längsachse des Filters (50) verlaufen.

5. Ansaugfilteranordnung nach einem der vorherigen Ansprüche, **dadurch gekennzeichnet, dass** das Filtermedium reinluftseitig oder rohluftseitig ein elastisches Stützmittel, insbesondere einen schraubenförmig verlaufenden Stützdraht aufweist.

6. Ansaugfilteranordnung nach einem der vorherigen Ansprüche, **dadurch gekennzeichnet, dass** das Filtermedium einen zickzackförmig gefalteten Verlauf aufweist, wobei die Falten längs des schlauchförmigen Körpers verlaufen.

7. Ansaugfilteranordnung nach einem der vorherigen Ansprüche, **dadurch gekennzeichnet, dass** sich in einer Ansaugluftleitung (48) im Bereich des Lufteintritts eine Mündungsklappe (51) befindet, welche sich in Abhängigkeit von dem Luftdurchsatz öffnet oder schließt.

8. Ansaugfilteranordnung nach einem der vorherigen Ansprüche, **dadurch gekennzeichnet, dass** von der Luftsammelbox (45) ausgehend ein Ansaugrohr (47) zur Zuführung der gefilterten Luft zu der Brennkraftmaschine vorgesehen ist, wobei das Ansaugrohr über einen öffenbaren Anschlussstutzen (46), oder über eine flexible oder teleskopartig bewegbare Leitung mit der Luftsammelbox (45) verbunden ist.

9. Ansaugfilteranordnung nach Anspruch 1, **dadurch gekennzeichnet, dass** der schlauchförmige Körper ein Wickelfilter ist, welcher eine Vielzahl von nutenförmigen Hohlräumen (31) aufweist, wobei jeder Hohlraum (31) auf wenigsten einer Seite verschlossen ist und die durch eine Wand benachbart liegenden Hohlräume (31) wechselseitig verschlossen sind, derart, dass die in die Hohlräume (31) eintretende Rohluft (32) durch benachbarte Wände hindurchströmt und die Wand filtrationswirksame Eigenschaften aufweist.

## Claims

1. Intake filter arrangement for an internal combustion engine of a vehicle consisting of a raw air intake zone, a filter medium and a clean air pipe (25), the raw air intake zone being arranged underneath the engine hood (13) of the vehicle and connected to the engine hood (13), the filter medium consisting of a tube-shaped body (16), this tube-shaped body (16) featuring a porosity such that a sufficient filtering of the intake air for the internal combustion engine is ensured, **characterized in that** the tube-shaped body (16) at the side opposite the engine hood (13) is provided with an elastic, basically airtight cover and that at least two tube-shaped bodies with filter medium (16-20) are provided for in which the filter medium is arranged, the tube-shaped bodies with filter medium extend directly under the engine hood (13) and lead into a joint air collection box (14).

2. Intake filter arrangement for an internal combustion engine according to claim 1, **characterized in that** the tube-shaped body (16) is a filter hose (50) which features a diameter between 40-80 mm.

3. Intake filter arrangement according to claim 1, **characterized in that** the tube-shaped body (16) features a pleated geometry that enables an arc-shaped installation.

4. Intake filter arrangement for an internal combustion engine according to claim 3, **characterized in that** the filter medium features several pleats disposed to each other in parallel that can be placed against each other and run in transverse direction to the longitudinal axis of the filter (50).

5. Intake filter arrangement according to one of the above claims, **characterized in that** the filter medium features either at the clean air side or at the raw air side an elastic support, in particular a helically shaped supporting wire.

6. Intake filter arrangement according to one of the above claims, **characterized in that** the filter medium features a zigzag pleated design, the pleats running alongside the tube-shaped body.

7. Intake filter arrangement according to one of the above claims, **characterized in that** in an intake air duct (48) in the area of the air intake an aperture flap (51) is provided for which opens or closes depending on the flow rate.

8. Intake filter arrangement according to one of the above claims, **characterized in that** starting at the air collection box (45) an intake manifold (47) for the supply of filtered air to the internal combustion engine is provided for, the intake manifold being connected via an openable connection piece (46) or via a flexible or telescopically movable duct with the air collection box (45).

9. Intake filter arrangement according to claim 1, **characterized in that** the tube-shaped body is a winding filter which features a plurality of groove-shaped hollow spaces (31), each hollow space (31) being closed at at least one side and the abutting hollow spaces (31) separated by a wall being closed alternately such that the raw air (32) entering into the hollow spaces (31) flows through adjacent walls and the wall featuring filtration-effective properties.

## Revendications

1. Ensemble de filtre d'aspiration pour un moteur à combustion interne d'un véhicule, composé d'une zone d'aspiration d'air brut, d'un milieu filtrant et d'un tube d'air pur (25), la zone d'aspiration d'air brut étant disposée sous le capot du moteur (13) du véhicule et étant reliée avec le capot du moteur (13), le milieu filtrant étant composé d'un corps en forme de tuyau (16), ce corps en forme de tuyau (16) présentant une porosité telle qu'une filtration suffisante de l'air aspiré soit garantie pour le moteur à combustion interne, **caractérisé en ce que** le corps en forme de tuyau (16) est pourvu, du côté opposé au capot du moteur (13), d'un recouvrement élastique essentiellement étanche à l'air et qu'au moins deux corps en forme de tuyau avec milieu filtrant (16-20), dans lesquels le milieu filtrant est disposé, sont prévus, les corps en forme de tuyau avec milieu filtrant s'étendant directement sous le capot du moteur (13) et entrant dans une boîte collectrice d'air (14) commune.

2. Ensemble de filtre d'aspiration pour un moteur à combustion interne selon la revendication 1, **caractérisé en ce que** le corps en forme de tuyau (16) est un tuyau de filtration (50) faisant preuve d'un diamètre de l'ordre de 40 à 80 mm.

3. Ensemble de filtre d'aspiration selon la revendication 1, **caractérisé en ce que** le corps en forme de tuyau (16) présente une géométrie à plis qui permet de le poser de manière coudée.

4. Ensemble de filtre d'aspiration pour un moteur à combustion interne selon la revendication 3, **caractérisé en ce que** le milieu filtrant présente plusieurs plis disposés parallèles les uns aux autres et pouvant être placés les uns à côté des autres qui s'étendent en sens transversal par rapport à l'axe longitudinal du filtre (50).

5. Ensemble de filtre d'aspiration selon l'une des revendications précédentes, **caractérisé en ce que** le milieu filtrant présente, du côté de l'air pur ou du côté de l'air brut, un élément de support élastique, en particulier un fil de support évoluant de manière hélicoïdale.

6. Ensemble de filtre d'aspiration selon l'une des revendications précédentes, **caractérisé en ce que** le milieu filtrant présente des plis en forme d'accordéon, ces plis s'étendant dans le sens longitudinal du corps en forme de tuyau.

7. Ensemble de filtre d'aspiration selon l'une des revendications précédentes, **caractérisé en ce que,** dans un conduit d'air aspiré (48), une vanne terminale (51) qui s'ouvre ou se ferme en fonction du débit d'air est située dans la zone de l'entrée de l'air.

8. Ensemble de filtre d'aspiration selon l'une des revendications précédentes, **caractérisé en ce que,** à partir de la boîte collectrice d'air (45), un tuyau d'aspiration (47) destiné à amener l'air filtré au moteur à combustion interne est prévu, la tubulure d'aspiration étant reliée à la boîte collectrice d'air (45) par l'intermédiaire d'une tubulure de raccord (46) pouvant être ouvert ou par l'intermédiaire d'un conduit flexible ou mobile de manière télescopique.

9. Ensemble de filtre d'aspiration selon la revendication 1, **caractérisé en ce que** le corps en forme de tuyau est un filtre enroulé qui présente de nombreuses cavités en forme de rainures (31), chaque cavité (31) étant obturée au moins d'un côté et les cavités contiguës et séparées par une paroi étant obturées en alternance de sorte que l'air brut entrant dans les cavités (31) traverse des parois contiguës et que la paroi présente des propriétés de filtration.
